# EUROPÄISCHE PATENTSCHRIFT

(11) **EP 3 594 166 B1**
(45) Veröffentlichungstag und Bekanntmachung des Hinweises auf die Patenterteilung: **24.01.2024**
(21) Anmeldenummer: 18183446.6
(22) Anmeldetag: 13.07.2018
(51) Int. Cl.: B66C 13/40, H04N 19/51, G06T 7/20, H04N 13/00, G06F 3/02, G06F 3/0481, H04N 23/63, G06F 3/01, G02B 27/01

(54) **KRANSTEUERUNG MIT VISUALISIERUNGSVORRICHTUNG**
CRANE CONTROL WITH A VISUALISING DEVICE
COMMANDE DE GRUE DOTÉE D'UN DISPOSITIF DE VISUALISATION

(43) Veröffentlichungstag der Anmeldung: 15.01.2020
(73) Patentinhaber: EPSILON Kran GmbH., 5020 Salzburg (AT)
(72) Erfinder: ROITHER, Mario, 5020 Salzburg (AT); GALLER, Martin, 5421 Adnet (AT)
(74) Vertreter: Torggler & Hofmann Patentanwälte - Innsbruck

(56) Entgegenhaltungen:
- EP-A1- 3 000 761
- JP-A- 2014 129 676
- US-A1- 2017 307 889
- US-A1- 2018 182 273

## Beschreibung

Die Erfindung betrifft eine Kransteuerung für einen Kran mit den Merkmalen des Oberbegriffs des Anspruchs 1 und einen Kran mit einer solchen Kransteuerung. Eine solche Kransteuerung ist aus EP 3 000 761 A1 bekannt.

Es sind bereits Kransteuerungen mit einer Visualisierungsvorrichtung bekannt, welche dazu ausgebildet ist, ein Kamerabild eines Ausschnitts eines Arbeitsumfelds des Krans für einen Bediener der Kransteuerung zu visualisieren.

Für solche Kransteuerungen ist bekannt, dass es auf Grund von unzureichender Güte der Visualisierung zu einer Beeinträchtigung des Bedieners kommen kann, die sich insbesondere durch Orientierungslosigkeit und Übelkeit ausdrückt.

Insbesondere kann eine Beeinträchtigung dadurch auftreten, dass bei der Visualisierung ein Teil des Arbeitsumfelds in einer stereoskopischen Darstellung visualisiert ist und ein anderer Teil in einer zweidimensionalen Darstellung visualisiert ist, wobei es bei herkömmlichen Visualisierungsvorrichtung an der Grenze zwischen den Darstellungen zu visuell störenden Verzerrungen kommt.

Auch kann es für einen Bediener auf Grund der unzureichenden Güte der Visualisierung zu einer kognitiven Dissonanz zwischen den von diesem abgegebenen Steuerbefehlen und den sich ergebenden Kranbewegungen und damit einhergehenden Änderungen der visualisierten Darstellung kommen. Diese Dissonanz führt zu einer Beeinträchtigung des körperlichen Wohlbefindens des Bedieners, welche sich in Fehlbedienungen des Krans manifestieren kann.

Aufgabe der Erfindung ist die Bereitstellung einer gattungsgemäßen Kransteuerung und eines Krans mit einer solchen Kransteuerung, bei welchen die vorbeschriebenen Probleme reduziert sind.

Diese Aufgabe wird durch eine Kransteuerung mit den Merkmalen des Anspruchs 1 und einen Kran mit einer solchen Kransteuerung gelöst. Vorteilhafte Ausführungsformen der Erfindung sind in den abhängigen Ansprüchen definiert.

Weil die Visualisierungsvorrichtung dazu konfiguriert ist, in einer das visualisierte Kamerabild überlagernden Darstellung eine grafische Hilfsdarstellung anzuzeigen, welche eine durch eine Bewegung des Bedieners verursachte Änderung des visualisierten Kamerabilds oder einer Kranstellung hervorhebt, hat sich überraschender Weise herausgestellt, dass die an der Grenze zwischen den Darstellungen auftretenden Verzerrungen als visuell weniger störend wahrgenommen werden und die oben beschriebene kognitive Dissonanz durch konsonante Beziehung der im Konflikt stehenden Wahrnehmungen reduziert ist.

Dies führt zu einer Entlastung des Bedieners und einer genaueren und sichereren Steuerung des Krans.

Gemäß der Erfindung ist vorgesehen, dass wenigstens ein erster Ausschnitt des Arbeitsumfelds in Form eines stereoskopischen Kamerabilds visualisierbar ist und wenigstens ein zweiter Ausschnitt des Arbeitsumfelds, welcher unmittelbar an den wenigstens einen ersten Ausschnitt angrenzt, in Form eines zweidimensionalen Kamerabilds visualisierbar ist, wobei bei gleichzeitiger Visualisierung zumindest eines Teils des wenigstens einen ersten Ausschnitts und zumindest eines Teils des wenigstens einen zweiten Ausschnitts des Arbeitsumfelds ein durch eine Bewegung des Bedieners verursachtes Wandern einer zwischen dem wenigstens einen ersten Ausschnitt und dem wenigstens einen zweiten Ausschnitt verlaufenden Grenze durch die grafische Hilfsdarstellung in Form einer die Grenze abdeckenden, mitwandernden Linie, hervorhebbar ist. Überraschenderweise hat sich gezeigt, dass eine bewusste Hervorhebung der Grenze zwischen den Ausschnitten zu einer verbesserten Wahrnehmung des visualisierten Kamerabildes und zu einem deutlich verbesserten Wohlbefindens des Bedieners des Krans führt. Die Linie kann dabei so dünn gewählt sein, dass diese - wenn überhaupt - nicht als störend wahrgenommen wird.

Abhängig vom eingesetzten Bilderfassungssystem kann es auch vorkommen, dass zwei zweite Ausschnitte des Arbeitsumfelds, welche beide in Form eines zweidimensionalen Kamerabilds visualisierbar sind, unmittelbar aneinander angrenzen. So kann beispielsweise vorgesehen sein, dass in einer Blickrichtung in Richtung des Krans ein erster Ausschnitt des Arbeitsumfelds in Form eines stereoskopischen Kamerabilds visualisierbar ist. Links und rechts davon kann jeweils ein zweiter Ausschnitt des Arbeitsumfelds in Form eines zweidimensionalen Kamerabilds visualisierbar sein. Für eine Rundumdarstellung des Arbeitsumfelds (z. B. 360° in einer horizontalen Ebene) kann nun vorgesehen sein, dass die beiden zweiten Ausschnitte aneinander angrenzen und somit die Rundumdarstellung ermöglichen. Vorzugsweise kann hierbei vorgesehen sein, dass auch die zwischen den beiden zweiten Ausschnitten verlaufende Grenze durch die grafische Hilfsdarstellung in Form einer die Grenze abdeckenden, mitwandernden Linie, hervorhebbar ist.

Es kann vorgesehen sein, dass die Visualisierungsvorrichtung eine am Kopf des Bedieners tragbare Virtual-Reality-Vorrichtung umfasst und die Bewegung des Bedieners eine Kopfbewegung ist. Die Visualisierungsvorrichtung zeigt dabei als visualisiertes Kamerabild einen Ausschnitt des Arbeitsumfelds des Krans. Der in der Visualisierungsvorrichtung angezeigte Ausschnitt ergibt sich dabei aus der Bewegung des Kopfes des Bedieners. So kann es sein, dass dem Bediener bei einer ersten Stellung des Kopfes nur ein erster Ausschnitt des Arbeitsumfelds in Form eines stereoskopischen Kamerabilds visualisiert wird. Wenn der Bediener seinen Kopf dann bewegt (z. B. horizontal nach links oder rechts verdreht), so kann das visualisierte Kamerabild aus dem ersten Ausschnitt schwenken und zusätzlich einen zweiten Ausschnitt des Arbeitsumfelds, welcher unmittelbar an den ersten Ausschnitt angrenzt und in Form eines zweidimensionalen Kamerabilds ausgebildet ist, umfassen. Zwischen diesen Ausschnitten verläuft eine Grenze, die durch eine die Grenze abdeckende Linie hervorhebbar ist. Da sich während der Kopfbewegung die jeweils angezeigten Ausschnitte ändern, wandert die Linie, welche stets die Grenze abdeckt, im visualisierten Kamerabild mit.

Bei einem Ausführungsbeispiel der Erfindung ist vorgesehen, dass die Kransteuerung wenigstens eine durch den Bediener betätigbare Bedienvorrichtung zur Ansteuerung von Kranbewegungen umfasst, und die grafische Hilfsdarstellung eine grafische Repräsentation der wenigstens einen Bedienvorrichtung hervorhebt. Vorzugsweise kann dabei vorgesehen sein, dass eine Position der grafischen Repräsentation der wenigstens einen Bedienvorrichtung im visualisierten Kamerabild abhängig von einer Realposition der durch den Bediener betätigbaren Bedienvorrichtung relativ zum Bediener ist. Mit anderen Worten kann vorgesehen sein, dass die Bedienvorrichtungen nur dann im visualisierten Kamerabild dargestellt sind, wenn sie bei der vom Bediener gewählten Blickrichtung auch in der Realität sichtbar wären.

Dabei kann vorgesehen sein, dass die grafische Hilfsdarstellung den momentanen Zustand der Betätigung der wenigstens einen Bedienvorrichtung, vorzugsweise eine momentane Auslenkung der Bedienvorrichtung in Form eines Joysticks, hervorhebt.

Überraschenderweise hat sich herausgestellt, dass die Anzeige der momentanen Auslenkungen der Bedienvorrichtungen im visualisierten Kamerabild zu einem deutlich verbesserten Wohlbefinden des Bedieners des Krans führt, da die oben beschriebene kognitive Dissonanz dadurch reduziert werden kann.

Vorzugsweise kann vorgesehen sein, dass die grafische Hilfsdarstellung eine sich bei einer Änderung der Kranstellung einstellende Bewegungsrichtung einer Kranspitze des Krans hervorhebt, wobei vorzugsweise die grafische Hilfsdarstellung wenigstens einen Richtungspfeil umfasst.

Vorzugsweise kann vorgesehen sein, dass die grafische Hilfsdarstellung das Kamerabild zumindest bereichsweise ausfüllt oder teilweise überlagert. Mit anderen Worten kann die grafische Hilfsdarstellung das visualisierte Kamerabild semitransparent überlagern.

Vorzugsweise kann vorgesehen sein, dass die grafische Hilfsdarstellung in Form einer virtuellen Darstellung ausgebildet ist.

Es kann auch vorgesehen sein, dass die grafische Hilfsdarstellung eine Bild-in-Bild-Darstellung eines Kamerabilds einer auf den Bediener oder die wenigstens eine Bedienvorrichtung gerichteten Kamera ist.

Schutz wird auch begehrt für einen Kran mit einer vorgeschlagenen Kransteuerung.

Ausführungsbeispiele der Erfindung werden anhand der Figuren diskutiert. Es zeigen:
- Fig. 1: eine Kransteuerung für einen Kran,
- Fig. 2: eine Visualisierung des Arbeitsumfelds des Krans gemäß dem Stand der Technik,
- Fig. 3a, 3b: Visualisierungen des Arbeitsumfelds des Krans gemäß einer vorgeschlagenen Kransteuerung,
- Fig. 4: ein visualisiertes Kamerabild gemäß einem weiteren Ausführungsbeispiel einer vorgeschlagenen Kransteuerung und
- Fig. 5: ein visualisiertes Kamerabild gemäß einem weiteren Ausführungsbeispiel einer vorgeschlagenen Kransteuerung.

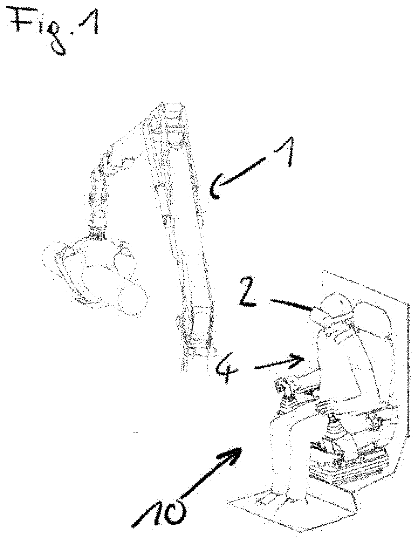

Fig. 1 zeigt eine Kransteuerung für einen Kran 1. Der Kran 1 wird von einem Bediener 8 über eine Bedienvorrichtung 9 gesteuert. Zur Visualisierung des Arbeitsumfelds des Krans 1 trägt der Bediener 8 eine Visualisierungsvorrichtung 2 in Form einer am Kopf des Bedieners 8 tragbaren Virtual-Reality-Vorrichtung. Die Visualisierungsvorrichtung 2 ist dazu ausgebildet, ein Kamerabild 3 eines Ausschnitts des Arbeitsumfelds des Krans 1 für den Bediener 8 der Kransteuerung zu visualisieren.

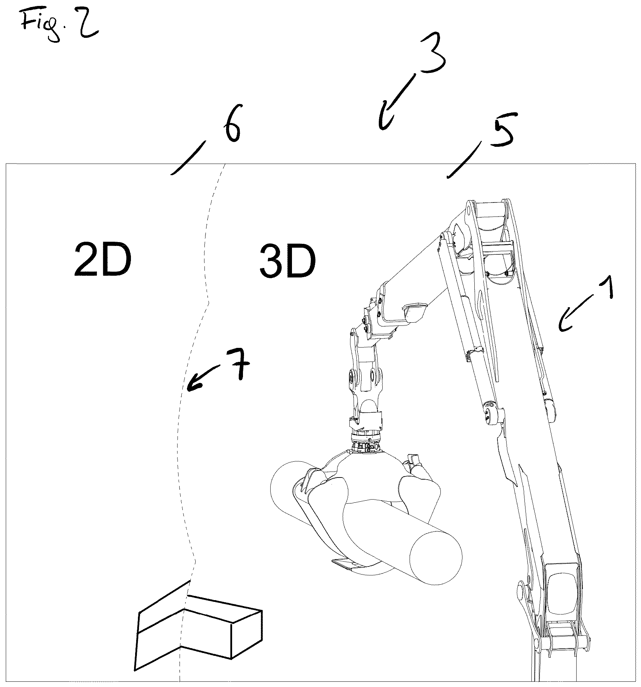

Fig. 2 zeigt eine Visualisierung des Arbeitsumfelds des Krans 1 gemäß dem Stand der Technik. Das visualisierte Kamerabild 3 umfasst einen erster Ausschnitt 5 des Arbeitsumfelds in Form eines stereoskopischen Kamerabilds und einen zweiten Ausschnitt 6 des Arbeitsumfelds in Form eines zweidimensionalen Kamerabilds, welcher unmittelbar an den ersten Ausschnitt 5 angrenzt. Wie dargestellt, befindet sich bei gleichzeitiger Visualisierung eines Teils des ersten Ausschnitts 5 und eines Teils des zweiten Ausschnitts 6 des Arbeitsumfelds eine Grenze 7 zwischen dem ersten Ausschnitt 5 und dem zweiten Ausschnitt 6, die hier in Form einer strichlierten Linie angedeutet ist. An der Grenze 7 treten durch den Übergang von der stereoskopischen auf eine zweidimensionale Visualisierung Verzerrungen auf, welche störend für den Bediener 8 sind. Beispielsweise ist hier ein quaderförmiges Objekt gezeigt, das in der 2D-Darstellung übertrieben verzerrt dargestellt ist.

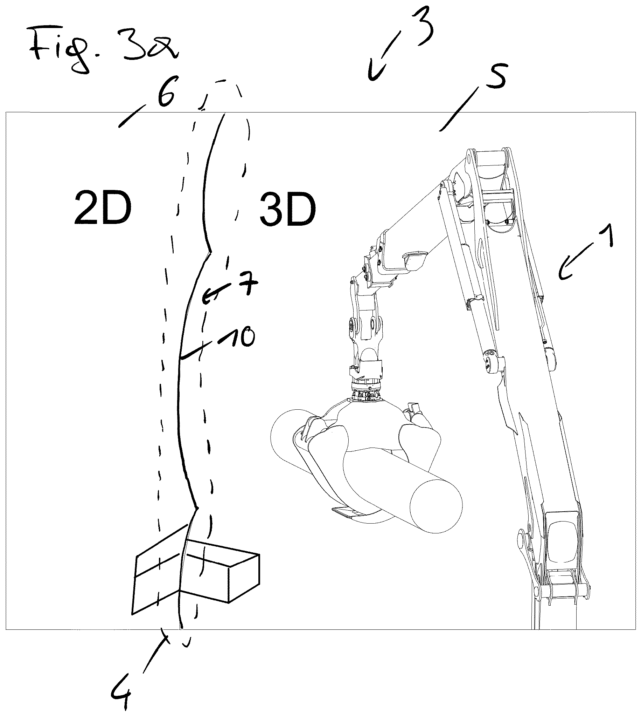

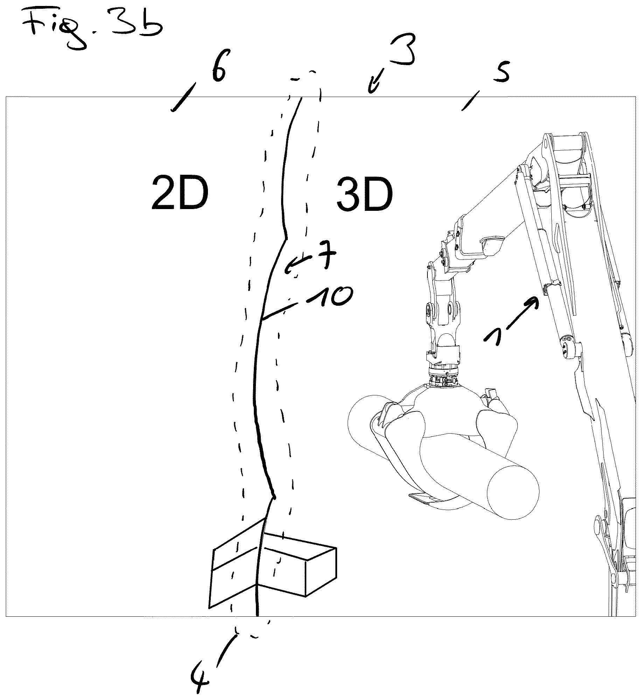

Fig. 3 umfassend die Fig. 3a und 3b zeigt eine Visualisierung des Arbeitsumfelds des Krans 1 ergänzt um eine erfindungsgemäße das visualisierte Kamerabild 3 überlagernde grafische Hilfsdarstellung 4.

Die in den Fig. 3a und 3b gezeigten visualisierten Kamerabilder 3 sind Einzelbilder aus einem durch eine Bildfolge visualisierten, bewegten Bild. Mit anderen Worten, die in den Fig. 3a und 3b gezeigten visualisierten Kamerabilder 3 entsprechen jeweils einem Frame eines bewegten visualisierten Kamerabildes 3. Ein Vergleich der Fig. 3a und 3b zeigt eine durch eine Bewegung des Bedieners 8 verursachte Änderung des visualisierten Kamerabilds 3. Die Visualisierungsvorrichtung 2 ist dazu konfiguriert, diese Änderung durch die Anzeige der grafischen Hilfsdarstellung 4 hervorzuheben.

In der in der Fig. 3 gezeigten Ausführung umfasst die grafische Hilfsdarstellung 4 eine der Grenze 7 überlagerte Linie 10.

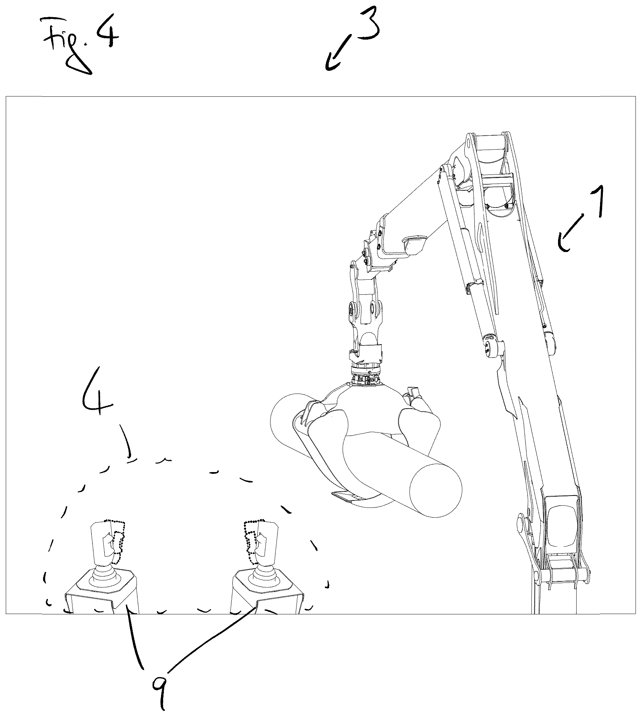

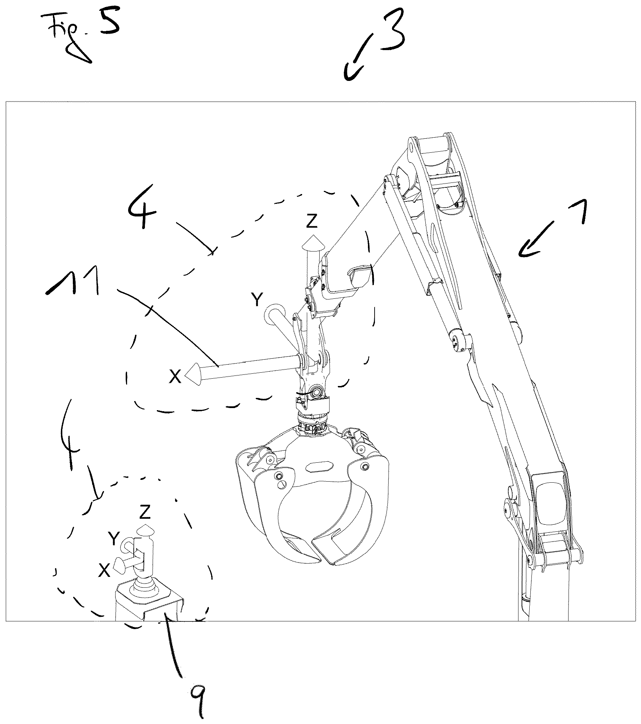

Fig. 4 zeigt ein visualisiertes Kamerabild 3, in welchem dem angezeigten Ausschnitt des Arbeitsumfelds des Krans 1 eine grafische Hilfsdarstellung 4 in Form einer grafischen Repräsentation von Bedienvorrichtungen 9 in Form von Joysticks überlagert ist. Dabei ist vorgesehen, dass die grafische Hilfsdarstellung 4 den momentanen Zustand der durch den Benutzer 8 tatsächlich erfolgenden (und durch diesen nicht direkt einsehbaren) Betätigung der Bedienvorrichtungen 9 hervorhebt. Wie dargestellt, sind unterschiedliche Auslenkungen der Bedienvorrichtungen 9 durch eine punktierte Darstellung der Joysticks angedeutet. Wie in Fig. 5 dargestellt, können an den Bedienvorrichtungen 9 zusätzlich Richtungspfeile in Bezug auf mögliche Auslenkrichtungen der Bedienvorrichtungen 9 visualisiert werden. Die im Kamerabild 3 dargestellten Bedienvorrichtungen 9 können entsprechend ihrer tatsächlichen Position in der Realität in Bezug auf den Bediener 8 im visualisierten Kamerabild 3 positioniert sein. Mit anderen Worten kann vorgesehen sein, dass die Bedienvorrichtungen 9 nur dann im visualisierten Kamerabild 3 dargestellt sind, wenn sie bei der vom Bediener 8 gewählten Blickrichtung auch in der Realität sichtbar wären.

Fig. 5 zeigt ein visualisiertes Kamerabild 3, in welchem dem angezeigten Ausschnitt des Arbeitsumfelds des Krans 1 eine grafische Hilfsdarstellung 4 in Form einer grafischen Repräsentation einer Bedienvorrichtung 9 in Form eines Joysticks mit drei Freiheitsgraden x, y, z überlagert ist. Der Joystick kann eine an sich bekannte Kranspitzensteuerung ermöglichen. Dabei ist vorgesehen, dass die grafische Hilfsdarstellung 4 die sich bei Betätigung der Bedienvorrichtung 9 einstellende Bewegung der Kranspitze (und somit Änderung der Kranstellung) in Form eines Richtungspfeiles hervorhebt. Repräsentativ ist für den Freiheitsgrad x einer seitlichen Bewegung der Kranspitze der Richtungspfeil 11 hervorgehoben. Wie dargestellt, können auch entsprechende Richtungspfeile an der visualisierten Bedienvorrichtung 9 angezeigt werden. Die dargestellten Richtungspfeile an der Kranspitze und an der Bedienvorrichtung 9 können grundsätzlich immer visualisiert sein, wobei bei Betätigung der Bedienvorrichtung 9 die der Betätigung entsprechenden Richtungspfeile (an der Bedienvorrichtung 9 und/oder an der Kranspitze) hervorgehoben werden.

Generell kann die grafische Hilfsdarstellung 4 auch eine Anzeige der ausgewählten Kranfunktion (z. B. in Form von Piktogrammen) enthalten.

### Bezugszeichenliste:

- 1: Kran
- 2: Visualisierungsvorrichtung
- 3: visualisiertes Kamerabild
- 4: grafische Hilfsdarstellung
- 5: erster Ausschnitt des Arbeitsumfelds
- 6: zweiter Ausschnitt des Arbeitsumfelds
- 7: Grenze
- 8: Bediener
- 9: Bedienvorrichtung
- 10: Linie
- 11: Richtungspfeil

- x, y, z: Freiheitsgrade

## Patentansprüche

1. Kransteuerung für einen Kran (1), mit einer Visualisierungsvorrichtung (2), welche dazu ausgebildet ist, ein Kamerabild (3) eines Ausschnitts eines Arbeitsumfelds des Krans (1) für einen Bediener (8) der Kransteuerung zu visualisieren, wobei die Visualisierungsvorrichtung (2) dazu konfiguriert ist, in einer das visualisierte Kamerabild (3) überlagernden Darstellung eine grafische Hilfsdarstellung (4) anzuzeigen, welche eine durch eine Bewegung des Bedieners (8) verursachte Änderung des visualisierten Kamerabilds (3) oder einer Kranstellung hervorhebt, **dadurch gekennzeichnet, dass** wenigstens ein erster Ausschnitt (5) des Arbeitsumfelds in Form eines stereoskopischen Kamerabilds visualisierbar ist und wenigstens ein zweiter Ausschnitt (6) des Arbeitsumfelds, welcher unmittelbar an den wenigstens einen ersten Ausschnitt (5) angrenzt, in Form eines zweidimensionalen Kamerabilds visualisierbar ist, wobei bei gleichzeitiger Visualisierung zumindest eines Teils des wenigstens einen ersten Ausschnitts (5) und zumindest eines Teils des wenigstens einen zweiten Ausschnitts (6) des Arbeitsumfelds ein durch eine Bewegung des Bedieners (8) verursachtes Wandern einer zwischen dem wenigstens einen ersten Ausschnitt (5) und dem wenigstens einen zweiten Ausschnitt (6) verlaufenden Grenze (7) durch die grafische Hilfsdarstellung (4) in Form einer die Grenze (7) abdeckenden, mitwandernden Linie (10), hervorhebbar ist.

2. Kransteuerung nach dem vorangehenden Anspruch, wobei die Visualisierungsvorrichtung (2) eine am Kopf des Bedieners (8) tragbare Virtual-Reality-Vorrichtung umfasst und die Bewegung des Bedieners (8) eine Kopfbewegung ist.

3. Kransteuerung nach wenigstens einem der vorangehenden Ansprüche, wobei die Kransteuerung wenigstens eine durch den Bediener (8) betätigbare Bedienvorrichtung (9) zur Ansteuerung von Kranbewegungen umfasst, und die grafische Hilfsdarstellung (4) eine grafische Repräsentation der wenigstens einen Bedienvorrichtung (9) hervorhebt, wobei vorzugsweise eine Position der grafischen Repräsentation der wenigstens einen Bedienvorrichtung (9) im visualisierten Kamerabild (3) abhängig von einer Realposition der durch den Bediener (8) betätigbaren Bedienvorrichtung (9) relativ zum Bediener (8) ist.

4. Kransteuerung nach dem vorangehenden Anspruch, wobei die grafische Hilfsdarstellung (4) den momentanen Zustand der Betätigung der wenigstens einen Bedienvorrichtung (9), vorzugsweise eine momentane Auslenkung der Bedienvorrichtung in Form eines Joysticks, hervorhebt.

5. Kransteuerung nach wenigstens einem der vorangehenden Ansprüche, wobei die grafische Hilfsdarstellung (4) eine sich bei einer Änderung der Kranstellung einstellende Bewegungsrichtung einer Kranspitze des Krans (1) hervorhebt, wobei vorzugsweise die grafische Hilfsdarstellung (4) wenigstens einen Richtungspfeil (11) umfasst.

6. Kransteuerung nach wenigstens einem der vorangehenden Ansprüche, wobei die grafische Hilfsdarstellung (4) das Kamerabild zumindest bereichsweise ausfüllt oder teilweise überlagert.

7. Kransteuerung nach wenigstens einem der vorangehenden Ansprüche, wobei die grafische Hilfsdarstellung (4) in Form einer virtuellen Darstellung ausgebildet ist.

8. Kransteuerung nach wenigstens einem der vorangehenden Ansprüche, wobei die grafische Hilfsdarstellung (4) eine Bild-in-Bild-Darstellung eines Kamerabilds einer auf den Bediener (8) oder die wenigstens eine Bedienvorrichtung (9) gerichteten Kamera ist.

9. Kran (1) mit einer Kransteuerung nach wenigstens einem der vorangehenden Ansprüche.

## Claims

1. Crane control for a crane (1), having a visualization device (2) which is designed to visualize a camera image (3) of a section of a working environment of the crane (1) for an operator (8) of the crane control, wherein the visualization device (2) is configured to display a graphical auxiliary depiction (4) in a depiction superposed on the visualized camera image (3), which highlights a change in the visualized camera image (3) or a crane position caused by a movement of the operator (8), **characterized in that**
at least one first section (5) of the working environment can be visualized in the form of a stereoscopic camera image and at least one second section (6) of the working environment, which is directly adjacent to the at least one first section (5), can be visualized in the form of a two-dimensional camera image, wherein, when simultaneously visualizing at least one part of the at least one first section (5) and at least one part of the at least one second section (6) of the working environment, a movement of a boundary (7) extending between the at least one first section (5) and the at least one second section (6) caused by a movement of the operator (8) can be highlighted by the graphical auxiliary display (4) in the form of a line (10) covering the boundary (7) and moving along with it.

2. Crane control according to the preceding claim, wherein the visualization device (2) comprises a virtual reality device wearable on the head of the operator (8) and the movement of the operator (8) is a head movement.

3. Crane control according to at least one of the preceding claims, wherein the crane control comprises at least one operating device (9) which can be actuated by the operator (8) for actuating crane movements, and the graphical auxiliary depiction (4) highlights a graphical representation of the at least one operating device (9), wherein preferably a position of the graphical representation of the at least one operating device (9) in the visualized camera image (3) is dependent on a real position of the operating device (9) which can be actuated by the operator (8) relative to the operator (8).

4. Crane control according to the preceding claim, wherein the graphical auxiliary depiction (4) highlights the instantaneous state of actuation of the at least one operating device (9), preferably an instantaneous deflection of the operating device in the form of a joystick.

5. Crane control according to at least one of the preceding claims, wherein the graphical auxiliary depiction (4) highlights a direction of movement of a crane tip of the crane (1) occurring when the crane position is changed, wherein preferably the graphical auxiliary depiction (4) comprises at least one directional arrow (11).

6. Crane control according to at least one of the preceding claims, wherein the graphical auxiliary depiction (4) fills or partially superposes the camera image at least in certain areas.

7. Crane control according to at least one of the preceding claims, wherein the graphical auxiliary depiction (4) is in the form of a virtual display.

8. Crane control according to at least one of the preceding claims, wherein the graphical auxiliary depiction (4) is a picture-in-picture display of a camera image of a camera directed towards the operator (8) or the at least one operating device (9).

9. Crane (1) with a crane control according to at least one of the preceding claims.

## Revendications

1. Commande de grue pour une grue (1), avec un dispositif de visualisation (2) qui est réalisé afin de visualiser une image de caméra (3) d'un détail d'un environnement de travail de la grue (1) pour un opérateur (8) de la commande de grue, dans laquelle
le dispositif de visualisation (2) est configuré afin d'afficher dans une représentation superposant l'image de caméra (3) visualisée une représentation auxiliaire (4) graphique qui souligne une modification causée par un mouvement de l'opérateur (8) de l'image de caméra (3) visualisée ou une position de grue, **caractérisée en ce qu'**au moins
un premier détail (5) de l'environnement de travail peut être visualisé sous la forme d'une image de caméra stéréoscopique et au moins un deuxième détail (6) de l'environnement de travail qui est directement contigu à l'au moins un premier détail (5), peut être visualisé sous la forme d'une image de caméra en deux dimensions, dans laquelle lors de la visualisation simultanée d'au moins une partie d'au moins un premier détail (5) et d'au moins une partie d'au moins un deuxième détail (6) de l'environnement de travail, une migration causée par un mouvement de l'opérateur (8) d'une limite (7) s'étendant entre l'au moins un premier détail (5) et l'au moins un deuxième détail (6) peut être soulignée par la représentation auxiliaire (4) graphique sous la forme d'une ligne (10) de migration recouvrant la limite (7).

2. Commande de grue selon la revendication précédente, dans laquelle le dispositif de visualisation (2) comprend un dispositif de réalité virtuelle portable au niveau de la tête de l'opérateur (8) et le mouvement de l'opérateur (8) est un mouvement de tête.

3. Commande de grue selon au moins l'une quelconque des revendications précédentes, dans laquelle la commande de grue comprend au moins un dispositif de commande (9) actionnable par l'opérateur (8) pour la commande de mouvements de grue, et la représentation auxiliaire (4) graphique souligne une représentation graphique d'au moins un dispositif de commande (9), dans laquelle de préférence, une position de la représentation graphique d'au moins un dispositif de commande (9) dans l'image de caméra (3) visualisée est dépendante d'une position réelle du dispositif de commande (9) actionnable par l'opérateur (8) par rapport à l'opérateur (8).

4. Commande de grue selon la revendication précédente, dans laquelle la représentation auxiliaire (4) graphique souligne l'état momentané de l'actionnement d'au moins un dispositif de commande (9), de préférence une déviation momentanée du dispositif de commande sous la forme d'un joystick.

5. Commande de grue selon au moins l'une quelconque des revendications précédentes, dans laquelle la représentation auxiliaire (4) graphique souligne un sens de déplacement apparaissant lors d'une modification de la position de grue d'une pointe de grue de la grue (1), dans laquelle de préférence, la représentation auxiliaire (4) graphique comprend au moins une flèche de direction (11).

6. Commande de grue selon au moins l'une quelconque des revendications précédentes, dans laquelle la représentation auxiliaire (4) graphique remplit l'image de caméra au moins par endroits ou la superpose partiellement.

7. Commande de grue selon au moins l'une quelconque des revendications précédentes, dans laquelle la représentation auxiliaire (4) graphique est réalisée sous la forme d'une représentation virtuelle.

8. Commande de grue selon au moins l'une quelconque des revendications précédentes, dans laquelle la représentation auxiliaire (4) graphique est une représentation de l'image dans l'image d'une image de caméra d'une caméra dirigée sur l'opérateur (8) ou l'au moins un dispositif de commande (9).

9. Grue (1) avec une commande de grue selon au moins l'une quelconque des revendications précédentes.
